# EUROPÄISCHE PATENTSCHRIFT

(11) **EP 2 677 615 B1**
(45) Veröffentlichungstag und Bekanntmachung des Hinweises auf die Patenterteilung: **22.08.2018**
(21) Anmeldenummer: 13172121.9
(22) Anmeldetag: 14.06.2013
(51) Int. Cl.: H02G 3/08, H02G 3/06, H02G 3/22

(54) **Tülle**
Grommet
Raccord

(30) Priorität: 18.06.2012 DE 102012105290
(43) Veröffentlichungstag der Anmeldung: 25.12.2013
(73) Patentinhaber: Elastomer Solutions GmbH, 54578 Wiesbaum (DE)
(72) Erfinder: Frauenkron, Udo, 53949 Dahlem (DE); Pepping, Karl-Heinz, 53937 Schleiden (DE); Sauder, Jörg, 53879 Euskirchen (DE)
(74) Vertreter: Kohlhof, Stephan

(56) Entgegenhaltungen:
- EP-A2- 1 004 480
- DE-A1-102004 043 730
- FR-A1- 2 005 913
- FR-A1- 2 829 631
- GB-A- 2 260 452
- US-A- 4 912 287
- US-A1- 2012 048 616
- US-B1- 7 534 965

## Beschreibung

Die Erfindung betrifft eine Tülle zur abgedichteten Durchführen einer Leitung durch eine Wandung. Insbesondere betrifft die Erfindung eine solche Tülle, die im Wesentlichen quer zur Leitungslängsrichtung zweifach oder mehrfach geteilt ist. Die Erfindung beschränkt sich ferner auf solche Tüllen, die stirnseitig an der Wandung anliegen.

Solche Tüllen umfassen ein Aufnahmeelement mit einer weitgehend zylindrischen Aufnahmeöffnung zum Aufnehmen der Leitung. Ein Flanschelement zum axialen Anlegen der Tülle an die Wandung und einen umlaufenden Dichtring, der abdichtend axial zwischen dem Flanschelement und der Wandung einsitzt. Eine Aufgabe einer solchen Tülle ist es, dass kein Fluid im Bereich der Leitungsdurchführung und Wandung hindurchgelangen kann.

Aus der EP 1 038 344 B1 ist eine zweigeteilte Tülle gezeigt, deren Flansch stirnseitig mit an eine Wandung dichtend angelegt wird. Im Flanschbereich ist ein Verstärkungselement aus einem härteren Werkstoff vorgesehen, welches ein Dichtelement aus einem weicheren Werkstoff trägt. Das Dichtelement mit dem weicheren Werkstoff überragt allerdings das Verstärkungselement in radialer Richtung. Im radialen Bereich, wo das Dichtelement dichtend an einer Wandung anliegen soll, weist das Dichtelement keine ausreichende Stabilität auf, so diese Konstruktion im Anwendungsfall keine zufriedenstellende Dichtigkeit bereitstellen kann. Allerdings kann die zweigeteilte Tülle nach der EP 1 038 344 B1 dieses Problem teilweise dadurch ausgleichen, dass der Flanschbereich durch eine Vielzahl von Schrauben mit im Bereich der Dichtung oder noch weiter radial außen verschraubt wird. Der Montageaufwand zum Einbringen der Löcher und für das Einsetzen der Schrauben ist allerdings recht hoch. Hingegen hat sich Abdichtung des Kabels gegenüber der Tülle anhand eines Presselements bewährt.

Ferner sind radiale Dichtungsanordnungen bekannt. Dabei lässt sich ein elastischer Dichtkörper durch axiales Verspannen radial aufweiten. Der radial aufgeweitete Dichtkörper legt sich dann radial innen and die Wandung der Öffnung dichtend an. Solche Systeme eignen sich allerdings für die Kabeldurchführung von Leitungen durch Bleche im Fahrzeugbau zumeist nicht, da die innere Umfangsfläche der Öffnung i.d.R. nur wenige Millimeter stark ist und sich somit keine ausreichende große Anlagefläche für den Dichtkörper ergibt.

Insbesondere bei der Verlegung von Kabelbäumen werden derzeit ringförmige Tüllen verwendet, die radial nicht öffenbar sind. Das bedeutet, dass für die Montage der Tülle der gesamte Kabelbaum durch die Tülle hindurchgefädelt werden muss. Zwar gibt es bereits Lösungen für geteilte Tüllen. Diese weisen den Vorteil auf, dass die Tülle radial auf den Kabelbaum an der gewünschten Stelle aufgesetzt werden. Das Fädeln des Kabelbaum durch die Tülle hindurch entfällt dann. Allerdings hat sich gezeigt, dass die derzeit bekannten geteilten Tüllen keine ausreichende Dichtigkeit bereitstellen können. Eine solche Tülle ist beispielsweise in der DE 10 2004 043 730 A1 gezeigt.

Die EP 1 004 480 A2 zeigt eine gattungsgemäße radial geteilte Tülle. Im Bereich der Teilungsebene neigen die Dichtungselemente stets dazu, sich zu verbiegen, was die Dichtwirkung verschlechtert.

Die US 7,534,965 B1 offenbart eine Weiterentwicklung der vorgenannten Tülle. Dabei wird das Kabel von einem kugelartigen Dichtelement aufgenommen, welches wiederum in einem sphärischen Aufnahmeraum eines Flanschelements aufgenommen ist. Somit wird dem Kabel eine räumliche Bewegungsfreiheit gegenüber dem Flansch eingeräumt.

Die US 2012/0048616 A1 zeigt eine radial geteilte Tülle mit einem Dichtring, der allerdings nicht von einem umlaufenden Stützring auf die abzudichtende Wandung beaufschlagt wird. Die Dichtwirkung solcher Tüllen ist sehr begrenzt.

In der US 4,912,287 ist eine zweigeteilte Tülle gezeigt. Hierbei ist allerdings nur die relativ harte Stützstruktur zweigeteilt; das Dichtelement selbst ist nicht zweigeteilt, so dass auch hier der Kabelbaum durch dieses Dichtelement hindurchgeführt werden muss. Solche Tüllen weisen grundsätzlich eine hohe Dichtheit auf, der Montageaufwand ist aber hoch.

Es ist Aufgabe der vorliegenden Erfindung eine axial dichtend anliegende Tülle zum abgedichteten Durchführen einer Leitung durch eine Wandung bereitzustellen, die leicht auf den Kabelbaum bzw. die Leitung montiert werden kann, und welche über eine ausreichende Dichtigkeit verfügt. Die der Erfindung zugrundeliegende Aufgabe wird gelöst durch eine Tülle nach Anspruch 1; bevorzugte Ausgestaltungen ergeben sich aus den Unteransprüchen.

Die Schnittstellen ermöglichen es, dass für die Montage der Tülle auf die Leitung eine radiale Öffnung an der Tülle entsteht, durch die Tülle auf die Leitung in radialer Richtung aufgesetzt werden kann. Radial bedeutet in diesem Zusammenhangweitgehend senkrecht zur Leitungslängsrichtung. Im montierten Zustand sind die Schnittstellen dann geschlossen und abgedichtet.

Die Befestigungsmittel dienen zum Befestigen der Tülle an der Wandung. Hierfür können insbesondere Rasthaken an der Tülle vorhanden sein, die die Öffnung der Wandung hintergreifen. Die Befestigungsmittel sind vorzugsweise so dimensioniert, dass die Tülle unter Ausnutzung der Elastizität des Dichtrings gegen die Wandung verspannt wird. Aufgrund der Einfachheit der Montage sind bevorzugt ausschließlich solche Befestigungsmittel vorgesehen, die durch die Leitungsöffnung (die Öffnung in der Wandung, durch die Leitung hindurchgeführt wird) hindurchragen und die Wandung hintergreifen, insbesondere Befestigungshaken. Solche Befestigungsmittel erfordern nämlich keine weiteren Bohrungen in der Wandung, durch die dann Befestigungsschrauben hindurchzuführen sind. Die Schwierigkeit besteht dann allerdings darin, die Spannkräfte vom Bereich radial innen (dort wo die Befestigungselemente sind) auf den Bereich radial außen zu leiten (dort wo der Dichtring ist).

Der Begriff axial bezieht sich vornehmlich auf eine Richtung senkrecht zur Wandung und ist damit zumeist gleichbedeutend mit der Öffnungsrichtung der Öffnung in der Wandung und einer Verspannungsrichtung der Tülle gegenüber der Wandung. Falls die Leitung senkrecht durch die Wandung hindurch geführt wird, ist eine Leitungslängsrichtung der Leitung ebenfalls identisch zur Öffnungsrichtung. Die Leitungslängsrichtung der Leitung und die Öffnungsrichtung der Öffnung können auch winklig zueinander sein, wenn die Leitung etwas schräg durch die Wandung hindurchgeführt werden soll.

Um nun die Dichtigkeit der Tülle zu verbessern umfasst das Flanschelement einen umlaufenden Stützring, der insbesondere aus einem härteren Material (insbesondere > 70 Shore A) gebildet ist als der Dichtring (insbesondere < 70 Shore A). Im eingebauten Zustand beaufschlagt der Stützring den Dichtring insbesondere aufgrund der Verspannung durch die Befestigungsmittel in Richtung der Wandung. Dabei deckt der Stützring den Dichtring in dessen radialer Position insbesondere vollständig axial ab. Als Dichtring wird dabei ein ringförmig umlaufendes Element bezeichnet, welches tatsächlich die Dichtung vornimmt, welches also sowohl dichtend mit dem Flanschelement als auch dichtend mit der Wandung in Anlage gerät. Der Dichtring kann dabei Bestandteil eines gegebenenfalls auch größeren elastischen Gegenstands sein, welcher in seiner Gesamtheit nicht unbedingt als ein ringförmiger Gegenstand anzusehen ist. Der Dichtring ist bevorzugt drehfest gegenüber dem Flanschelement gehalten. Eine stoffschlüssige Verbindung zwischen Dichtring und Flanschelement ist bevorzugt.

Als Dichtring i.S.d. Erfindung ist dann der dichtende ringförmige Bereich eines solchen Gegenstands anzusehen. Die Ringform muss nicht zwangsläufig kreisrund oder oval sein; vielmehr kann sich die Ringform grundsätzlich an der Öffnung in der Wandung orientieren oder auch ungleichmäßig sein. Ringförmig bedeutet allerdings, dass im montierten Zustand eine die Öffnung in der Wandung vollständig umlaufende Dichtung entsteht.

Durch das vollständige Bedecken des Dichtrings durch den axial beaufschlagenden Stützring wird die Dichtqualität deutlich verbessert, da nunmehr das recht harte Stützelement den Dichtring eben genau dort in Richtung auf die Wand gezielt beaufschlagt, wo eben die Dichtung zu erfolgen hat. Ein Ausweichen von Teilen des Dichtrings, insbesondere im Bereich der Schnittstelle des Dichtrings, kann durch die Beaufschlagung durch den Stützring vermieden werden. Insbesondere die Dichtsicherheit bei Wasserbeaufschlagungen unter Hochdruck kann damit verbessert werden.

Grundsätzlich geht die Erfindung davon aus, dass auf diese Weise eine ausreichende Dichte nur mit axial anliegenden Tüllen vernünftig durchzuführen ist, insbesondere dann, wenn die Wandung durch ein relativ dünnes Blech ausgebildet ist. Insofern ist das Flanschelement stets zum stirnseitigen Anlegen der Tülle an die Wandung vorgesehen. Der Dichtring liegt dann axial (zumindest auch) zwischen dem Flanschelement und der Wandung, insbesondere an einer weitgehend ebenen Stirnfläche (im Gegensatz zu einer Innenumfangsfläche) der Öffnung an. Der Dichtring kann insbesondere in einem stirnseitigen Ringraum zwischen der Wandung und dem Flanschelement anliegen. Der insbesondere elastische Dichtring wird unter Vorspannung gehalten.

Erfindungsgemäß ist nun die Schnittstelle des Stützrings, in Umfangsrichtung betrachtet, versetzt zur Schnittstelle des Dichtrings angeordnet. Das bedeutet, dass die Schnittstellen des Stützrings nicht deckungsgleich sind mit dem Schnittstellen des Dichtrings. Insbesondere die Schnittstellen neigen bei den bekannten zweigeteilten Tüllen stets dazu, sich in gewisser Weise wegzubiegen. Dies trifft natürlich auf die recht weichen Dichtringe zu. Allerdings trifft diese Neigung zum Wegbiegen in gewissem Maße auch auf den harten Stützring zu, da dieser Stützring naturgemäß im Bereich der Schnittstelle über eine geringere Stabilität verfügt. Durch das versetzte Anordnen der beiden Schnittstellen werden somit die Schwachstellen des Dichtrings und die Schwachstelle des Stützrings voneinander getrennt; mit anderen Worten bedeutet dies aber auch, dass die beabstandet zu den Schnittstellen vorhandenen "Starkstellen" des Stützrings nunmehr die Schwachstellen des Dichtrings beaufschlagen, was dort zu einer deutlichen Verbesserung der Dichtigkeit führt. Ein Wegbiegen des Dichtrings im Bereich der Schnittstelle wird damit deutlich verringert. Die Überlappung beträgt in Umfangsrichtung zumindest 0,5mm, vorzugsweise zumindest 2mm.

Mit anderen Worten bedeutet dies insbesondere, dass ein ungeschnittenes Teilstück des Stützrings die Schnittstelle des Dichtrings überlappt. Unter einem ungeschnittenen Teilstück ist also ein solches Teilstück des Stützrings gemeint, welches einstückig ausgebildet ist und eben nicht durch eine Schnittstelle unterbrochen ist. Dieses ungeschnittene Teilstück liegt dann gleichermaßen an zwei Abschnitten des Dichtrings an, wobei diese beiden Abschnitte des Dichtrings zueinander geschnitten sind, also durch eine Schnittstelle voneinander getrennt sind.

Vorzugsweise ist die Tülle mehrteilig ausgebildet. Dabei umfasst das Flanschelement zwei oder mehrere, separate Flanschteile. Das Aufnahmeelement umfasst zwei oder mehrere, separate Aufnahmeteile. Der Dichtring umfasst zwei oder mehrere separate Dichtringteile.

Die jeweiligen Elemente der Tülle, nämlich Flanschelement, Aufnahmeelement und Dichtring, können auch jeweils noch einen drittes, viertes usw. entsprechendes Teil umfassen. Jeweils ein Flanschteil, ein Aufnahmeteil und ein Dichtringteil sind Bestandteile eines Tüllenteils. Zwei oder mehr solcher Tüllenteile ergeben dann die gesamte Tülle. Jeweils ein Flanschteil und ein Aufnahmeteil, welche einem gemeinsamen Tüllenteil zugeordnet sind, sind bevorzugt einstückig miteinander ausgebildet und vorzugsweise aus einem härteren Werkstoff als der Dichtring. Das Dichtringteil ist insbesondere separat zu dem Flanschteil und dem Aufnahmeteil des jeweiligen Tüllenteils ausgebildet und aus einem weicheren Werkstoff als das Flanschteil hergestellt. Vorzugweise ist allerdings das Dichtringteil jeweils unlösbar mit dem zugehörigen Flanschteil ausgebildet. Insbesondere können das Dichtringteil sowie das Flanschteil und insbesondere auch das Aufnahmeteil in dem Spritzgießprozess zur Herstellung des Flanschteils und gegebenenfalls auch das Aufnahmeteil mit eingegossen werden.

In einer derartigen Ausgestaltung beaufschlagt vorzugsweise das dem ersten Flanschteil zugehörige Stützringteil zumindest im Bereich der Schnittstelle des Dichtring sowohl das erste als auch das zweite Dichtringteil axial. Dafür sind die Schnittstellen des Dichtrings und des Stützrings in Umfangsrichtung betrachtet zueinander versetzt angeordnet.

Vorzugsweise ist die Tülle quer zu einer Leitungslängsachse geteilt, insbesondere zweigeteilt. Die entstehenden zwei oder mehr Tüllenteile können dann separat auf die Leitung aufgesetzt werden und dann miteinander befestigt werden. Die Teilung erfolgt vorzugsweise symmetrisch, d.h. die Tüllenteile sind gleich groß. Vorzugsweise sind Tüllenteile, die jeweils eine Tülle umfasst, identisch zueinander ausgebildet und jedes der Tüllenteile umfasst ein Aufnahmeteil, ein Flanschteil sowie ein Dichtringteil. Insbesondere sind zwei identische Tüllenteile vorgesehen. In diesem Zusammenhang sei angemerkt, dass im Rahmen der vorliegenden Beschreibung der Stützring als Teil des Flanschelements angesehen wird. Insofern ist auch ein Stützringteil Bestandteil eines Flanschteils und die Schnittstelle des Stützrings Bestandteil der Schnittstelle des Flanschelements.

Vorzugsweise bildet der Stützring eine erste Anlagefläche aus, an der der Dichtring dichtend anliegt. In einer ersten Ausgestaltung ist der Stützring im Bereich der ersten Anlagefläche mehr als 30° winklig gegenüber einer Dichtebene E ausgerichtet. Durch die winklige Ausbildung wird eine gewisse Anstellung des Stützrings im radial äußeren Bereich vollzogen, der dem Stützring ein vergrößertes Flächenträgheitsmoment verschafft, ohne dass dazu die Wandstärke zu vergrößern ist. Die Stabilität des Stützrings wird damit vergrößert, so dass der Stützring auch besser zur Beaufschlagung des Dichtrings geeignet ist.

In einer zweiten Ausgestaltung ist die erste Anlagefläche konisch oder sphärisch ausgebildet und öffnet sich nach radial, also im wesentlichen zur Leitung hin. Dies bedeutet, dass sich die Anlagefläche also nach weiter außen der Wandung annähert, so dass der Ringraum zwischen erster Anlagefläche um eine zweite Anlagefläche an der Wandung insbesondere verkleinert wird. Dies ist vorteilhaft für eine verbesserte Dichtung im radial äußeren Bereich.

In einer ersten Ausgestaltung des Dichtrings verläuft die Schnittstelle des Dichtrings geradlinig, in Seitenansicht betrachtet parallel zu einer Verspannungsrichtung. Die Verspannungsrichtung ist im wesentlichen die Richtung der Normalkräfte, durch welche die Tülle gegen die Wandung axial beaufschlagt wird. Die Verspannungsrichtung ist meistens identisch zur Leitungslängsrichtung der Leitung. Sollte allerdings die Leitung schief durch die Wandung hindurchgeführt werden, so können sich die Verspannungsrichtung und die Leitungslängsrichtung durchaus auch voneinander unterscheiden.

In einer zweiten bevorzugten Ausgestaltung verläuft die Schnittstelle des Dichtrings geradlinig aber in Seitenansicht betrachtet winklig, insbesondere in einem Winkel von mehr als 30° zu einer Verspannungsrichtung.

In einer dritten bevorzugten Ausgestaltung verläuft die Schnittstelle des Dichtrings in Seitenansicht betrachtet ansteigend kurvig, insbesondere ausgehend von der ersten Anlagefläche des Dichtrings am Stützring.

In einer vierten Ausgestaltung verläuft die Schnittstelle des Dichtrings in Seitenansicht betrechten zick-zack-förmig. Die Linien des Zick-Zack können dabei stets winklig zur Axialdichtebene und zu einer Senkrechten dazu verlaufen. Alternativ können die Linien auch parallel zur Axialdichtebene und zu einer Senkrechten dazu verlaufen. Dann entsteht eine Treppenform.

Insbesondere die zweite und die dritte Ausgestaltung, sowie die vierte Ausgestaltung (mit Ausnahme der Treppenform) der Schnittstelle des Dichtrings bewirkt dabei, dass die Axialkräfte durch die winkligen Verläufe bzw. kurvigen Verläufe auch eine Kraftkomponente in Umfangsrichtung erzeugen, so dass die Schnittstellen des Dichtrings verbessert aneinander angepresst werden. Im Gegensatz dazu ist es bei der ersten Ausgestaltung die der vierten Ausgestaltung mit Treppenform so, dass die Umfangskräfte zum Anpressen der Schnittstellen der Dichtringe aneinander lediglich durch die Vorspannung erzeugt werden, welche durch die Befestigungsmittel zur Befestigung der Tüllenteile aneinander hervorgerufen werden.

Vorzugsweise ist das Dichtringteil Bestandteil eines einstückigen Dichtteils, welches ferner zwei Radialdichtteile zum Abdichten der Schnittstelle des Flanschelements sowie eine Umfangsdichtteil zum Abdichten der Leitung innerhalb der des Aufnahmeelements aufweist, wobei die Radialdichtteile das Umfangsdichtteil mit dem Dichtringteil verbinden. Es entsteht folglich ein einfach handhabbares Dichtteil, welches insbesondere auf einfache Art und Weise mit den anderen Elementen des Tüllenteils zum gesamten Tüllenteil montiert werden kann. Durch die Einstückigkeit werden weitere Schnittstellen zwischen separaten Dichtkomponenten weitgehend verhindert, was die Qualität der Tülle im Hinblick auf langanhaltenden Dichtigkeit verbessert. Jedes Tüllenteil weist vorzugsweise genau ein einstückiges Dichtteil auf.

Um die Einstückigkeit zu realisieren kann das Dichtteil ferner zwei Axialträger umfassen, welche eine oder mehrere Schnittstellen des Aufnahmeelements abdichten und mehrere Dichtrippen des Umfangsdichtteil tragen. Die zuvor beschriebenen Details des Dichtteils setzt nicht zwangsläufig einen Stützring wie in Anspruch 1 beschrieben Anspruch 1 voraus, sondern kann auch als eine eingeständige Erfindung angesehen werden.

Die Erfindung wird anhand der Figuren nachfolgend näher erläutert. Hierin zeigt:
- Figur 1: eine erfindungsgemäße Tülle, zusammengesetzt und in perspektivischer Darstellung;
- Figur 2: die Tülle nach Figur 1, zusammengesetzt, im Querschnitt mit aufgenommener Leitung
- Figur 3: die Tülle nach Figur 1, geteilt,
a) in perspektivischer Darstellung,
b) in Draufsicht,
c) in Seitenansicht;
- Figur 4: ein Dichtteil der Tülle nach Figur 1 in Einzelheit in perspektivischer Darstellung;

- Figur 5: einen Schnittbereich der Tülle nach Figur 1 in vergrößerter perspektivischer Darstellung;
- Figur 6: Varianten der Ausgestaltung der Schnittstelle des Dichtrings in Seitenansicht.

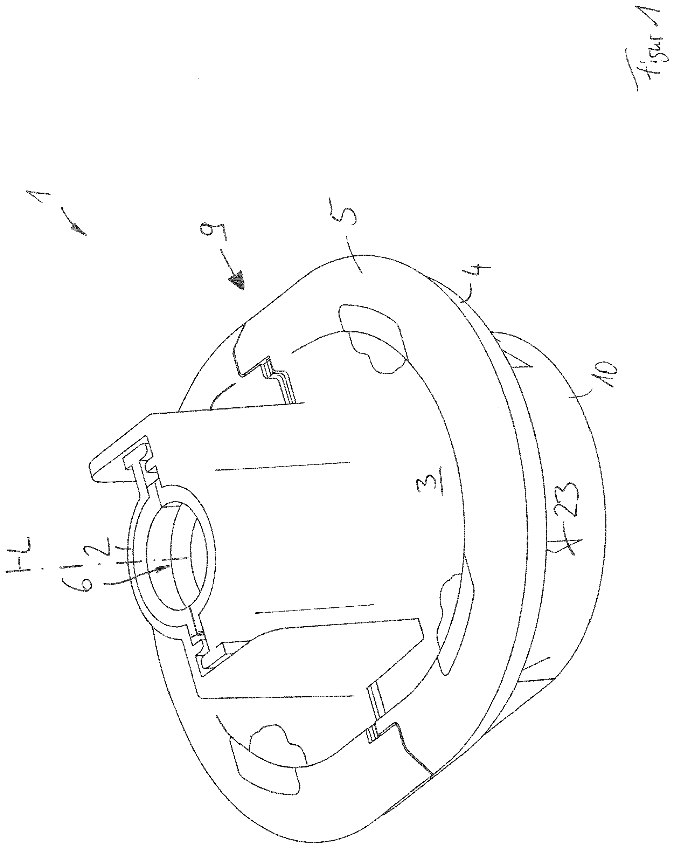

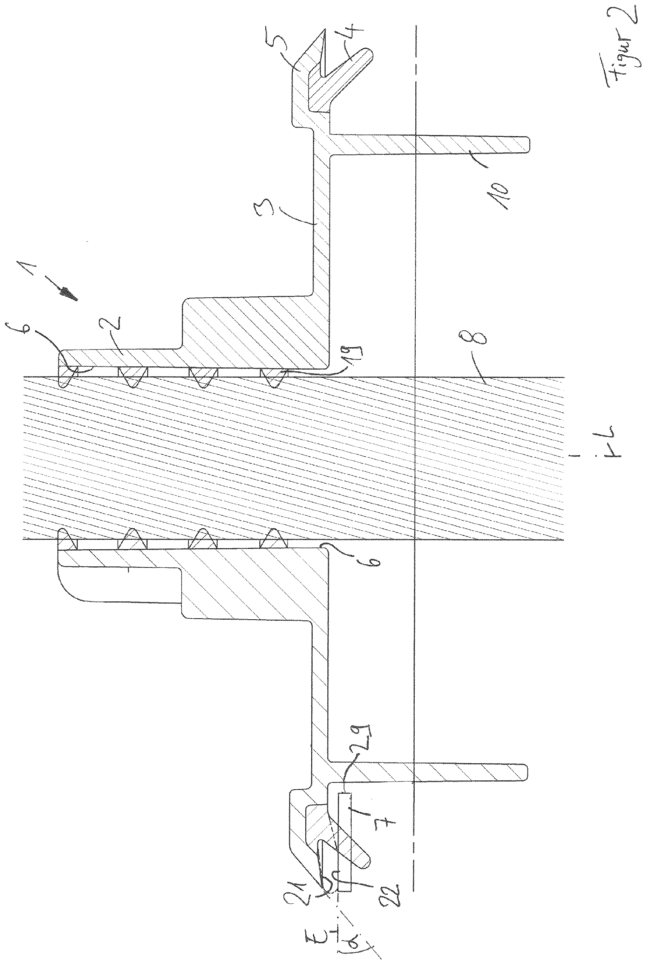

In den Figuren 1 und 2 ist eine erfindungsgemäße Tülle 1 gezeigt. Diese ist vorgesehen, um eine Leitung 8 entlang deren Leitungslängsrichtung L abgedichtet durch eine Öffnung 29 in einem Blech 7 durchzuführen. In Figur 2 ist dabei schematisch die Leitung 8 gezeigt sowie die das Blech 7. Das Blech 7 ist der Einfachheit halber nur auf einer Seite der Tülle 1 eingezeichnet; es ist aber tatsächlich umlaufend ausgebildet und damit auch auf der anderen Seite vorhanden.

Die Tülle 1 ist in den Figuren 1 und 2 in einem zusammengesetzten Zustand gezeigt, wobei die Teilungsebene in Figur 2 nicht sichtbar ist. Im zusammengesetzten Zustand bildet die Tülle 1 mehrere Elemente aus. Die Elemente umfassen ein Aufnahmeelement 2, welches eine im wesentlichen zylindrische Aufnahmeöffnung 6 für die Leitung 8 ausbildet. Die zylindrische Aufnahmeöffnung 6 definiert die Leitungslängsrichtung L. Innerhalb der zylindrischen Aufnahmeöffnung 6 sind Dichtrippen 19 angeordnet, die die Leitung 8 ringförmig umschließen. Die Tülle 1 ist damit zum längswasserdichten Hindurchführen von solchen Leitungen geeignet, welche selbst bereits über eine Längswasserdichtigkeit verfügen und nach außen eine im wesentlichen homogene weitgehend zylindrische Oberfläche ausbilden, ohne dass der Ringraum zwischen Aufnahmeelement 2 und Leitung 7 mit einem Dichtmittel zwangsläufig aufzufüllen ist. Die Grundfläche, die der Zylinderform der Öffnung 6 zugrunde liegt, kann ohne weiteres von der gezeigten Kreisform abweichen.

Die Tülle 1 weist ferner ein Flanschelement 3 auf, welches im wesentlichen radial zur Leitungslängsrichtung L ausgerichtet ist. Das Flanschelement 3 liegt dann zumindest teilweise an der Wandung 7 mittelbar an. An dem Flanschelement 3 schließt sich axial ein Befestigungsabschnitt 10 an. Der Befestigungsabschnitt 10 ragt durch die Öffnung der Wandung 7 hindurch und weist Rasthaken 23 zum Verbinden der Tülle 1 mit dem Blech 7 auf. Die Rasthaken 23 hintergreifen das Blech 7 und Erzeugen eine Vorspannung. Es sind keine weiteren Bohrungen am Blech für weitere Befestigungsschrauben erforderlich.

Die Tülle 1 weist als weiteres Element ferner einen Dichtring 4 auf, der in einem radial außen liegenden Bereich des Flanschelements 3 angeordnet ist. Der Dichtring 4 ist dafür vorgesehen, bei montierter Tülle im Ringraum zwischen dem Flanschelement 3 und dem Blech 7 axial einzusitzen. Der montierte Zustand ist auf der linken Seite der Figur 2 zu erkennen, wobei der Dichtring 4 gestrichelt dargestellt ist, wenn er zwischen der Wandung 7 und dem Flanschelement 1 liegt; der Dichtring ist mir durchgehenden Linien gezeichnet, wenn er in seiner natürlichen Form ist.

In Figur 2 ist zu erkennen, dass der Dichtring 4 und das Flanschelement 3 aus unterschiedlichen Materialien hergestellt ist. Dabei eignet sich für das Flanschelement 3 grundsätzlich ein Kunststoff, welcher über eine gewisse Steifigkeit und Härte verfügt, insbesondere härtere Thermoplaste, beispielsweise Polypropylen, Polyamide, u. ä. jeweils unverstärkt oder verstärkt. Für den Dichtring 4 eignen sich Materialien, welche weicher sind als das Material des Flanschelements 3, insbesondere (thermoplastische) Elastomere, da sich der Dichtring 4 anschmiegen soll zwischen einer ersten Anlagefläche 21 des Flanschelements 3 und einer zweiten Anlagefläche 22 des Blechs 7. Ein bevorzugter Härtebereich für den Dichtring liegt unabhängig vom genauen Werkstoff zwischen 30 und 70 Shore A. Der bevorzugte Härtebereich des Stützrings liegt unabhängig vom genauen Werkstoff oberhalb von 70 Shore A.

Damit der Dichtring 4 radial außen mit hoher Axialkraft beaufschlagt werden kann, was vorteilhaft für eine zuverlässige Abdichtung ist, weist das Flanschelement 3 radial außen einen Stützring 5 auf, der in diesem Fall einstückig mit anderen Teilen des Flanschelements 3 ausgebildet ist. Der Stützring überdeckt den Dichtring 4 radial zumindest dort, wo eine Dichtung erfolgen soll. In seinem radial äußersten Bereich weist der Stützring 5 dabei eine Wandung auf, die um einen Winkel α von etwa 40° gegenüber der Axialdichtebene E ausgerichtet ist. Als Axialdichtebene E wird i.S.d. Erfindung grundsätzlich eine durch die zweite Anlagefläche 22 des Blechs 7 aufgespannte Ebene bezeichnet.

Die erste Axialanlagefläche 21 ist am Stützring 5 nicht eben bzw. vollständig parallel zur Axialdichtebene E ausgebildet, sondern weist eine im wesentlichen konische Form auf und öffnet sich in Richtung nach radial innen, also zur Leitung 8 hin. Das bedeutet, dass sich die erste Axialanlagefläche 21 im wesentlichen von der Axialdichtebene E entfernt, je näher die betrachtete Position nach innen wandert. Anders ausgedrückt: radial außen nähert sich die erste Axialanlagefläche 21 der Axialdichtebene E an. Die Fläche muss aber nicht konisch sein, sondern kann genauso eine sphärische Ausbildung haben, die sich ebenfalls nach innen öffnet bzw. nach radial außen der Axialdichtebene E annähert.

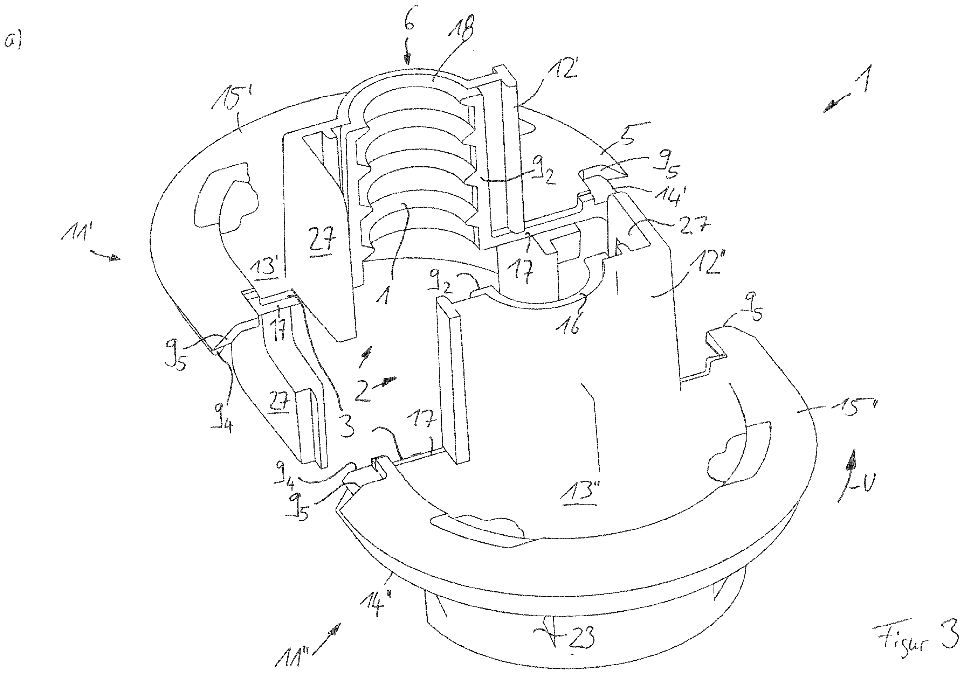

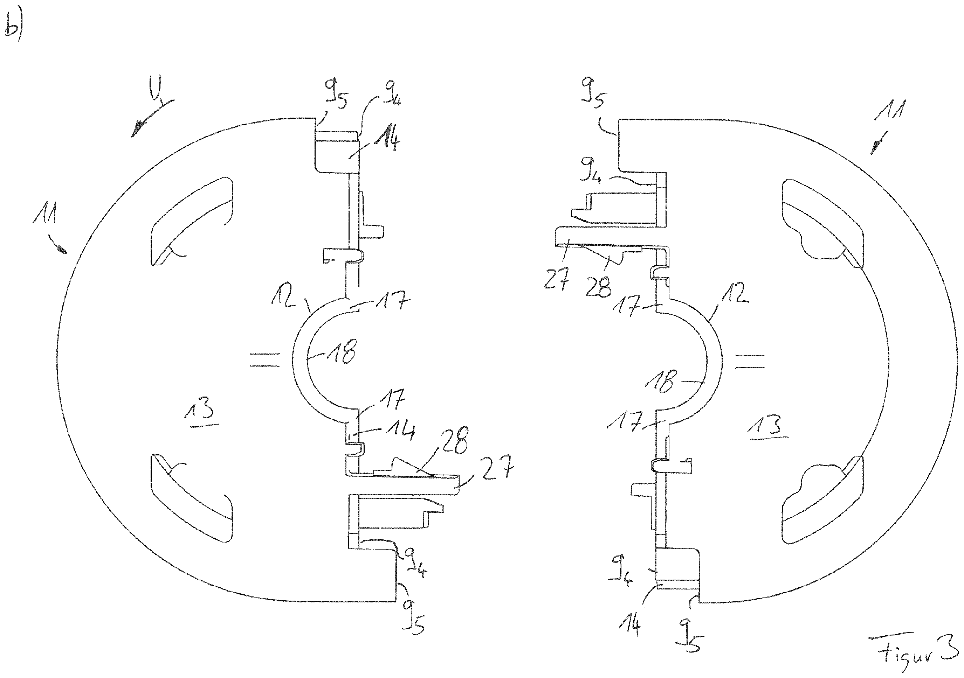

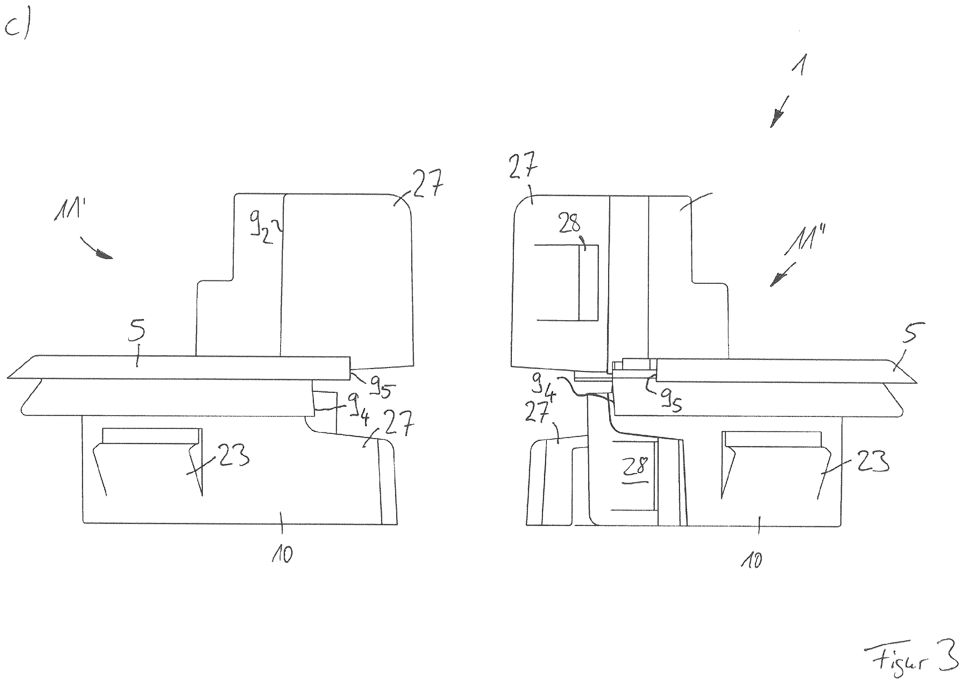

In den unterschiedlichen Darstellungen der Figur 3 ist gezeigt, dass die Tülle 1 im wesentlichen mittig auseinandergenommen bzw. geteilt werden kann. Dafür sind die bezüglich Figur 1 und 2 beschriebenen Elemente 2, 3, 4, 10 der Tülle 1 stets aus zwei getrennten bzw. separaten Teilen 12, 13, 14, 15 gebildet. So ist die Tülle 1 selbst aus zwei Tüllenteilen 11 gebildet. Beide Tüllenteile 11 sind vollständig identisch ausgebildet, so dass zur Herstellung der beiden Tüllenteile 11 das selbe Werkzeug verwendet werden kann. Insofern wird nachfolgend lediglich eine der beiden Tüllenteile 11 beschrieben.

Das Tüllenteil 11' weist ein Aufnahmeteil 12' auf, welches zusammen mit dem Aufnahmeteil 12" des anderen Tüllenteils 11" das Aufnahmeelement 2 bildet. Die beiden Aufnahmeteile 12 liegen an einer gemeinsamen Schnittstelle 9₂ aneinander an.

Das Tüllenteil 11' weist ein Flanschteil 13' auf, welches zusammen mit dem Flanschteil 13" des anderen Tüllenteils 11" das Flanschelement 3 bildet. Die beiden Flanschteile 13 liegen an einer gemeinsamen Schnittstelle 9₃ aneinander an. An dem Flanschteil 13' ist ein Stützringteil 15' radial außen vorgesehen, welches zusammen mit dem Stützringteil 15" des anderen Tüllenteils 11" den Stützring 5 bildet. Die beiden Stützringteile 15 liegen an einer gemeinsamen Schnittstelle 9₅ aneinander an.

Das Tüllenteil 11' weist ferner ein Dichtringteil 14' auf, welches zusammengesetzt mit dem Dichtringteil 14" des anderen Tüllenteils 11" den Dichtring 4 bildet. Die beiden Dichtringteile 14 liegen an einer gemeinsamen Schnittstelle 9₄ aneinander an.

Dabei sind das Aufnahmeteil 12 und das Flanschteil 13 (inkl. des Stützringteils 15) einstückig miteinander ausgebildet. Um die beiden Tüllenteile 11 miteinander zu verbinden sind im Bereich des Befestigungsabschnitts 10 sowie im Bereich des Aufnahmeelements 2 an beiden Tüllenteilen 11 jeweils zwei Spannbacken 27 vorgesehen, die jeweils in den Bereich des jeweils anderen Tüllenteils 11 hineinragen und sich dort mit Rasthaken 28 miteinander unter Vorspannung befestigt werden.

An der radial verlaufenden Schnittstelle 9₃, an der die beiden Flanschteile 13 aneinander anliegen, ist ein Radialdichtteil 17 vorgesehen, welches die Trennfuge der zwischen den beiden Flanschteilen abdichtet.

Die Dichtrippen 19, die Abdichtung der Leitung 8 innerhalb der Aufnahmeöffnung 6 bilden, sind durch zwei in Leitungslängsrichtung betrachtet halbkreisförmige Umfangsdichtteile 18 gebildet, die an den jeweiligen Aufnahmeteilen 12 angebracht sind.

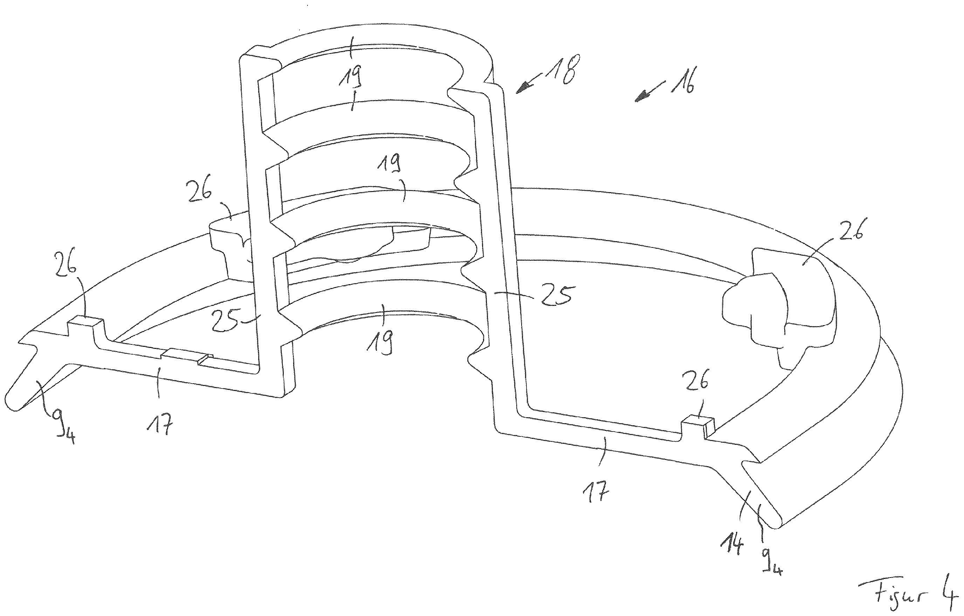

Gemeinsam bildet jeweils eines der Umfangsdichtteile 18, zwei der Radialdichtteile 17 und eines der Dichtringteile 14 ein einstückig ausgebildetes Dichtteil 16 aus, welches in Figur 4 gezeigt ist. Die Radialdichtteile 17 verbinden dabei das Dichtringteil 14 radial mit dem Umfangsdichtteil 18.

Das Umfangsdichtteil 18 umfasst mehrere, im vorliegenden Fall vier, halbkreisförmige Dichtrippen 19, die axial beabstandet zueinander in der Öffnung 6 angebracht werden. Die Dichtrippen 19 bilden zusammen mit den Dichtrippen des anderen Tüllenteils die Umfangsrichtringe. Die Dichtrippen 19 sind über Axialträger 25 miteinander und mit jeweils einem der zugehörigen Radialdichtteile 17 verbunden. Die Axialträger 25 verlaufen parallel zur Leitungslängsrichtung L.

Das Flanschteil 13 und das Aufnahmeteil 12 wird gemeinsam in einem separaten Herstellungsprozess hergestellt und anschließend in das Spritzgusswerkzeug zur Herstellung der gesamten Tüllenteils 11 eingesetzt. Danach erfolgt der Spritzgießprozess, bei dem das Dichtteil 16 hergestellt wird und zugleich an das Flanschteil 13 stoffschlüssig angeschlossen wird, sodass eine unlösbare Verbindung zwischen Dichtteil 16 und Flanschteil 13 entsteht. Unlösbar bedeutet dabei, dass eine zerstörungsfreie Demontage des Tüllenteils 11 nicht möglich ist. Dabei umfasst das Dichtteil 16 Positioniervorsprünge 26, mit denen das Dichtteil 16 formschlüssig innerhalb des ganzen Tüllenteils 11 gehalten ist.

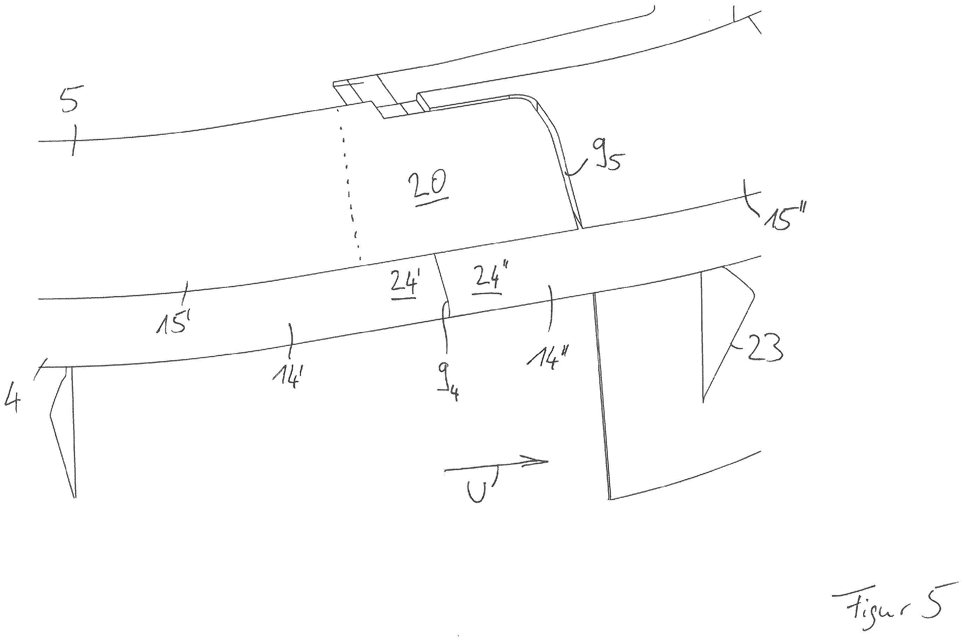

Anhand von Figur 5 wird ein wesentlicher Aspekt der Erfindung näher erläutert. Es sind die Schnittstellenbereiche 9₄ des Dichtrings 4 und 9₅ des Stützrings 5 gezeigt. Zu erkennen sind die beiden Stützringteile 15, die an der Schnittstelle 9₅ aneinander anliegen. Genau genommen ist allerdings in der Schnittstelle 9₅ ein kleiner Spalt zwischen den beiden Stützringteilen 15 vorhanden, so dass die beiden Stützringteile 15 etwas Spielraum zueinander haben. Die Dichtringteile 14 können dadurch unter einer gewissen Vorspannung im Umfangsrichtung zueinander gehalten werden.

Ferner sind die beiden Dichtringteile 14 zu erkennen, die an der Schnittstelle 9₄ aneinander anliegen und den Dichtring 4 bilden. Die Dichtringteile 14 liegen dabei unter einer Vorspannung aneinander an, so dass die Schnittstelle 9₄ abgedichtet ist. Dafür sind die Rasthaken 28 an den Spannbacken 27 derart positioniert, dass die Tüllenteile 11 radial aufeinander zu beaufschlagt werden.

Ferner ist zu erkennen, dass in Umfangsrichtung U betrachtet die Schnittstelle 9₄ der Dichtringteile 14 versetzt angeordnet ist zur Schnittstelle 9₅ der Stützringteile 15. Es entsteht damit folglich ein ungeschnittenes Teilstück 20 des Stützringteils 15', der einstückig ausgebildet ist und dabei zwei Bereiche 24' und 24" des Dichtrings 4 überlappt. Bei diesen Bereichen 24 handelt sich zu einen um denjenigen Bereich 24' des ersten Dichtringteils 14', der von der einen Seite an die Schnittstelle 9₄ zwischen den beiden Dichtringteilen 14 angrenzt und zum anderen um denjenigen Bereich 24" des zweiten Dichtringteils 14", der von der anderen Seite an die Schnittstelle 9₄ zwischen den beiden Dichtringteilen 14 angrenzt.

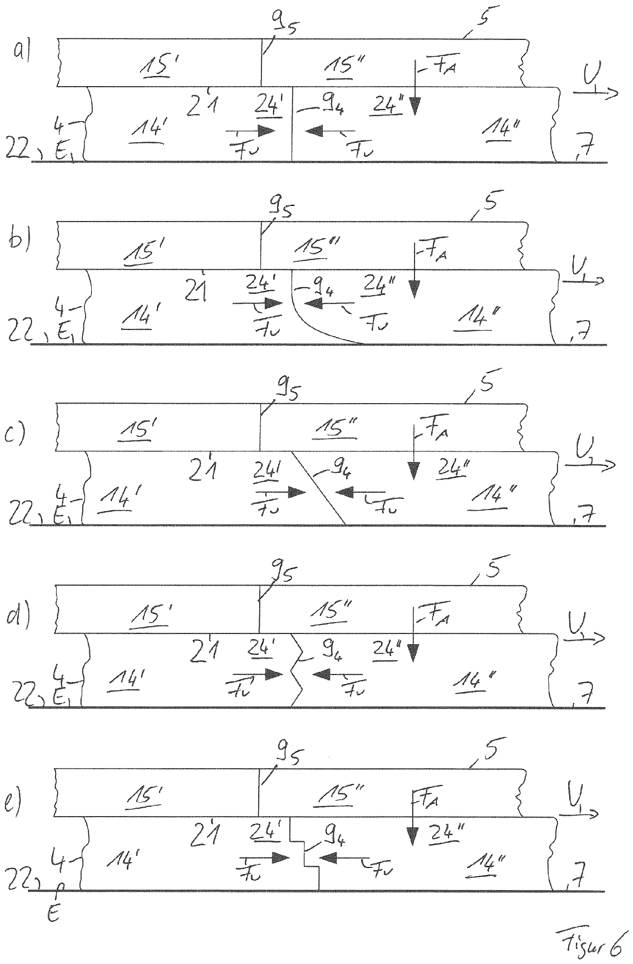

Mit anderen Worten, da der Dichtring 4 im vorliegenden Beispiel mehrteilig ausgebildet ist beaufschlagt das ungeschnittene Teilstück 20 des Stützrings 15 also an die Schnittstelle 9₄ angrenzenden Bereich beider Dichtringteile 14', 14". Gleiches könnte auch möglich sein, wenn der Dichtring einstückig ausgebildet wäre und lediglich an einer Stelle aufgeschnitten ist. Ein solcher Dichtring könnte dann radial aufgespreizt werden, um radial auf die Leitung aufgesetzt zu werden. Die Dichtsituation an der nunmehr einen Schnittstelle 9₄ wäre dann aber identisch. Die in Figur 5 dargestellte Schnittstelle 9₄ steht nur stellvertretend für mögliche Ausgestaltungen, die anhand der Figur 6 erläutert wird.

In den Figuren 6 a) bis e) werden nun unterschiedliche Ausgestaltungen der Schnittstelle 9₄ des Dichtrings beschrieben, die auf die Tülle nach den Figuren 1 bis 5 anwendbar sind. Bei allen drei Ausgestaltungen wird die Tülle 1 über die Befestigungsmittel mit der Wandung 7 verspannt. Insofern beaufschlagt der Stützring 5 mit einer Axialkraft F_{A} den Dichtring 4 in Richtung auf das Blech 7. In Figur 6a ist nun eine Variante der Schnittstelle 9₄ der Schnittstelle dargestellt, die gradlinig und dabei senkrecht zum Blech 7 verläuft. Die Umfangskräfte F_{U}, die ein Zusammendrücken der Dichtringteile 14' und 14" bewirken, wird allein durch die Vorspannung bewirkt, die sich aus dem Zusammensetzen der beiden Tüllenteile 11 ergibt.

In Figur 6b ist eine andere Form der Schnittstelle 9₄ gezeigt. Diese ist kreisförmig ausgestaltet. Dabei untergreift der eine Abschnitt des Dichtrings 24' den anderen Abschnitt des Dichtrings 24", welche beide an die Schnittstelle 9₄ angrenzen. Durch die Axialkraft, die durch den Stützring auf den Dichtring aufgebracht wird, ergibt sich durch die kreisbogenförmig Ausgestaltung nun auch eine Komponente der Umfangskraft, die durch die Axialkraft erzeugt wird. Insofern verstärkt die Axialkraft die Umfangskräfte, die die beiden Dichtringteile 14' aufeinander zu beaufschlagen.

In Figur 6c ist anstelle der kreisbogenförmigen Ausgestaltung eine winklige aber gradlinige Ausgestaltung gewählt. Auch hier ergibt sich eine Komponente der Umfangskraft F_{U}, die durch die Axialkraft fa erzeugt wird. Ansonsten sind die Ausführungen zu Figur 6d vollumfänglich auf die Ausgestaltung nach Figur 6c anzuwenden.

In den Figuren 6d und 6e sind jeweils gezackte Ausgestaltungen der Schnittstelle 9₄ gezeigt. In Figur 6d sind die Zacken dabei winklig zur Axialdichtebene ausgebildet. Auch hier ergibt sich eine Komponente der Umfangskraft F_{U}, die durch die Axialkraft F_{A} erzeugt wird. In Figur 6e bilden die Zacken eine Stufenform. Die Umfangskräfte F_{U} werden allein durch die Vorspannung bewirkt, die sich aus dem Zusammensetzen der beiden Tüllenteile 11 ergibt.

### Bezugszeichenliste

- 1: Tülle
- 2: Aufnahmeelement
- 3: Flanschelement
- 4: Axialdichtring
- 5: Stützring
- 6: Aufnahmeöffnung für Leitung
- 7: Blech
- 8: Leitung
- 9: Schnittstelle
- 10: Befestigungsabschnitt
- 11: Tüllenteil
- 12: Aufnahmeteil
- 13: Flanschteil
- 14: Dichtringteil
- 15: Stützringteil
- 16: Dichtteil
- 17: Radialdichtteil
- 18: Umfangsdichtteil
- 19: Dichtrippen
- 20: ungeschnittenes Teilstück des Stützringteils
- 21: erste Axialanlagefläche am Stützring
- 22: zweite Axialanlagefläche an der Wandung
- 23: Rasthaken zum Verbinden der Tülle an der Wand
- 24: an Schnittstelle unmittelbar angrenzende Abschnitte des Dichtrings
- 25: Axialträger des Dichtteils
- 26: Positioniervorsprünge des Dichtteils
- 27: Spannbacken
- 28: Rasthaken zum Verbinden der Tüllenteile miteinander
- 29: Öffnung in der Wandung

- U: Umfangsrichtung
- L: Leitungslängsrichtung
- E: Axialdichtebene
- F_{A}: Axialkraft
- F_{U}: Umfangskraft

## Patentansprüche

1. Tülle (1) zum abgedichteten Durchführen einer Leitung (8) durch eine Wandung (7), umfassend
ein Aufnahmeelement (2) mit einer weitgehend zylindrischen Aufnahmeöffnung (6) zum Aufnehmen der Leitung (8),
ein Flanschelement (3) zum axialen Anlegen der Tülle (1) an die Wandung (7),
einen umlaufenden Dichtring (4), wobei die Tülle (1) an Schnittstellen (9₂, 9₃, 9₄, 9₅) der jeweiligen Elemente (2, 3, 4) radial aufgeschnitten ist und so in radialer Richtung auf die Leitung (8) aufsetzbar ist,
wobei zum Verbinden der Tülle (1) mit der Wandung (7) die Tülle (1) mit Befestigungsmitteln (23) axial gegen die Wandung (7) verspannt wird,
wobei das Flanschelement (3) einen umlaufenden Stützring (5) aufweist, der im eingebauten Zustand den Dichtring (4) radial überdeckt und den Dichtring (5) aufgrund der Verspannung durch die Befestigungsmittel in Richtung der Wandung (7) beaufschlagt,
**dadurch gekennzeichnet,**
**dass** der Dichtring (4) zum abdichtenden Einsitzen sich axial zwischen dem Flanschelement (3) und der Wandung (7) befindet und die Schnittstelle (9₅) des Stützrings (5) in Umfangsrichtung (U) betrachtet versetzt zur Schnittelle (9₄) des Dichtrings (4) angeordnet ist.

2. Tülle nach dem vorherigen Anspruch,
**dadurch gekennzeichnet,**
**dass** die Schnittstelle (9₅) des Stützrings (5) in Umfangsrichtung (U) betrachtet zumindest im Bereich der Kontaktstelle zwischen Stützring (5) und Dichtring (4) versetzt zur Schnittelle (9₄) des Dichtrings (4) angeordnet ist.

3. Tülle nach einem der vorherigen Ansprüche,
**dadurch gekennzeichnet,**
**dass** ein ungeschnittenes Teilstück (20) des Stützrings (5) die Schnittstelle (9₄) des Dichtrings (4) in Umfangsrichtung (U) überlappt, so dass das ungeschnittene Teilstück (20) an zwei Abschnitten (24', 24") des Dichtrings (4) zur Anlage gelangt, welche in Umfangsrichtung (U) betrachtet von zwei entgegengesetzten Seiten an die Schnittstelle (9₄) des Dichtrings (4) angrenzen.

4. Tülle nach einem der vorherigen Ansprüche,
**dadurch gekennzeichnet,**
**dass** das Flanschelement (3) ein erstes und ein dazu separates zweites Flanschteil (13', 13") umfasst, und
**dass** das Aufnahmeelement (2) ein erstes und ein dazu separates zweites Aufnahmeteil (12', 12") umfasst,
wobei insbesondere das erste Flanschteil (13') mit dem ersten Aufnahmeteil (12') und das zweite Flanschteil (13") mit dem zweiten Aufnahmeteil (12") einstückig ausgebildet ist.

5. Tülle nach einem der vorherigen Ansprüche,
**dadurch gekennzeichnet,**
**dass** der Dichtring (4) ein erstes Dichtringteil (14') und ein dazu separates zweites Dichtringteil (14") umfasst, wobei insbesondere das erste Dichtringteil (14') unlösbar mit dem ersten Flanschteil (13') und das zweite Dichtringteil (14") unlösbar mit dem zweiten Flanschteil (13") verbunden ist.

6. Tülle nach Anspruch 4 und 5,
**dadurch gekennzeichnet,**
**dass** die Schnittstellen (9₃, 9₅) des Dichtrings (4) und des Stützrings (5) in Umfangsrichtung (U) betrachtet derart zueinander versetzt angeordnet sind, dass das dem ersten Flanschteil (13') zughörige erste Stützringteil (15') zumindest im Bereich der Schnittstelle (9₅) des Dichtrings (4) sowohl das erste als auch das zweite Dichtringteil (13', 13") axial beaufschlagt.

7. Tülle nach einem der vorherigen Ansprüche,
**dadurch gekennzeichnet,**
**dass** der Stützring (5) eine erste Anlagefläche (21) ausbildet, an der der Dichtring (4) dichtend anliegt, wobei der Stützring (5) im Bereich der ersten Anlagefläche (21) um einen Winkel (α) von mehr als 30° winklig gegenüber einer Dichtebene (E) ausgerichtet ist.

8. Tülle nach einem der vorherigen Ansprüche,
**dadurch gekennzeichnet,**
**dass** der Stützring (5) eine erste Anlagefläche (21) ausbildet, an der der Dichtring (4) dichtend anliegt, wobei die erste Anlagefläche (21) konisch oder sphärisch ausgebildet ist und sich nach radial innen öffnet.

9. Tülle nach einem der vorherigen Ansprüche,
**dadurch gekennzeichnet,**
**dass** die Schnittstelle (9₄) des Dichtrings (4) geradlinig verläuft und in Seitenansicht betrachtet parallel zu einer Verspannungsrichtung (L) ausgerichtet ist.

10. Tülle nach einem der Ansprüche 1 bis 8,
**dadurch gekennzeichnet,**
**dass** die Schnittstelle (9₄) des Dichtrings (4) geradlinig verläuft und in Seitenansicht betrachtet winklig, insbesondere in einem Winkel von mehr als 30°, zu einer Verspannungsrichtung (L) ausgerichtet ist.

11. Tülle nach einem der Ansprüche 1 bis 8,
**dadurch gekennzeichnet,**
**dass** die Schnittstelle (9₄) des Dichtrings (4) in Seitenansicht betrachtet ansteigend kurvig verläuft, insbesondere ansteigend ausgehend von der ersten Anlagefläche (21) des Stützrings (5) am Dichtring (4).

12. Tülle nach einem der Ansprüche 1 bis 8,
**dadurch gekennzeichnet,**
**dass** die Schnittstelle (9₄) des Dichtrings (4) in Seitenansicht betrachtet eine gezackte Form aufweist.

13. Tülle nach einem der vorherigen Ansprüche,
**dadurch gekennzeichnet,**
**dass** das Dichtringteil (14) Bestandteil eines einstückigen Dichtteils (16) ist, welches ferner zumindest ein Radialdichtteil (17), insbesondere zwei Radialdichtteile (17), zum Abdichten der Schnittstelle (9₃) des Flanschelements (3), sowie ein Umfangsdichtteil (18) zum zumindest teilweisen Abdichten der Leitung (8) innerhalb des Aufnahmeelements (2) aufweist, wobei das zumindest eine Radialdichtteil (17) das Umfangsdichtteil (18) mit dem Dichtringteil (14) verbindet.

14. Tülle nach dem vorherigen Anspruch,
**dadurch gekennzeichnet,**
**dass** das Dichtteil (16) ferner zumindest einen Axialträger (25) umfasst, der zumindest einen Teil der Schnittstelle (9₂) des Aufnahmeelements (2) abdichtet und mehrere Dichtrippen (19) des Umfangsdichtteil (18) trägt.

## Claims

1. A grommet (1) for sealed passing a conduct (8) through a wall (7), comprising a receiving element (2) with a substantially cylindrical receiving opening (6) for receiving the conduct (8),
a flange element (3) for axial engagement the grommet (1) to the wall (7),
a circumferential sealing ring (4),
wherein the grommet (1) is cut radially at interfaces (9₂, 9₃, 9₄, 9₅) of the respective elements (2, 3, 4) and thus can be placed in a radial direction onto the conduct (8), wherein for connecting the grommet (1) with the wall (7) the grommet (1) is axially against the wall (7) by fastening means (23),
wherein the flange element (3) has a circumferential support ring (5), which in the installed condition radially covers the sealing ring (4) and due to the bracing by the fastening means urges the sealing ring (5) in the direction of the wall (7),
**characterized in**
**that** the sealing ring (4) for sealingly sitting is located axially between the flange element (3) and the wall (7), and
the interface (9₅) of the support ring (5), when viewed in the circumferential direction (U), is located offset from the interface (9₄) of the sealing ring (4).

2. Grommet according to the preceding claim,
**characterized in**
**that** the interface (9₅) of the support ring (5), when viewed in the circumferential direction (U), is located at least in the region of the contact area between the support ring (5) and sealing ring (4) offset from the interface (9₄) of the sealing ring (4).

3. Grommet according to one of the preceding claims,
**characterized in**
**that** an uncut portion (20) of the support ring (5) overlaps the interface (9₄) of the sealing ring (4) in the circumferential direction (U), so that the uncut portion (20) comes into abutment at two sections (24', 24") of the sealing ring (4), which adjoins the interface (9₄) of the sealing ring (4) from two opposite sides when viewed in the circumferential direction (U).

4. Grommet according to one of the preceding claims,
**characterized in**
**that** the flange element (3) comprises a first and a separate second flange part (13', 13"), and
**that** the receiving element (2) comprises a first and a separate second receiving part (12', 12") separate therefrom,
wherein in particular the first flange part (13') with the first receiving part (12') and the second flange part (13") with the second receiving part (12") is formed integrally.

5. Grommet according to one of the preceding claims,
**characterized in**
**that** the sealing ring (4) comprises a first sealing ring part (14') and a second sealing ring part (14") separate therefrom, wherein in particular the first sealing ring part (14') is inseparable connected with the first flange part (14). 13') and the second sealing ring part (14") is inseparable connected with the second flange part (13").

6. Grommet according to claim 5 and 6,
**characterized in**
**that** the interfaces (9₃, 9₅) of the sealing ring (4) and of the support ring (5), when viewed in the circumferential direction (U), are located offset from each other, such that the said first support ring part (15') belonging to the first flange part (13'), axially acts upon both the first and the second sealing ring part (13', 13") at least in the area of the interface (95) of the sealing ring (4).

7. Grommet according to one of the preceding claims,
**characterized in**
**that** the support ring (5) forms a first contact surface (21), against which the sealing ring (4) abuts in a sealing manner, wherein in the area of the first contact surface (21) the support ring (5) is oriented at an angle (α) of more than 30° relative to a sealing plane (E).

8. Grommet according to one of the preceding claims,
**characterized in**
**that** the support ring (5) forms a first abutment surface (21) on which the sealing ring (4) abuts in a sealing manner, wherein the first abutment surface (21) is conical or spherical and opens in radial inward direction.

9. Grommet according to one of the preceding claims,
**characterized in**
**that** the interface (9₄) of the sealing ring (4) extends straight-lined and, when viewed in side view, is oriented parallel to a direction (L) of bracing.

10. Grommet according to one of claims 1 to 8,
**characterized in**
**that** the interface (9₄) of the sealing ring (4) extends straight-lined and, when viewed in side view, is oriented at an angle, in particular at an angle of more than 30°, to a direction (L) of bracing.

11. Grommet according to one of claims 1 to 8,
**characterized in**
**that** the interface (9₄) of the sealing ring (4), when viewed in side view, takes a rising curved course, in particular rising starting from the first contact surface (21) of the support ring (5) on the sealing ring (4).

12. Grommet according to one of claims 1 to 8,
**characterized in**
**that** the interface (9₄) of the sealing ring (4), when viewed in side view, has a serrated shape.

13. Grommet according to one of the preceding claims,
**characterized in**
**that** the sealing ring part (14) is part of a one-piece sealing part (16), which further comprises at least one radial sealing part (17), in particular two radial sealing parts (17), for sealing the interface (9₃) of the flange element (3), and a circumferential sealing member (18) for at least partially sealing the conduct (8) within the receiving member (2), wherein the at least one radial sealing member (17) connects the circumferential sealing member (18) with the sealing ring member (14).

14. Grommet according to one of the preceding claims,
**characterized in**
**that** the sealing part (16) further comprises at least one axial support (25), which seals at least a part of the interface (9₂) of the receiving element (2) and which carries a plurality of sealing ribs (19) of the circumferential sealing part (18).

## Revendications

1. Douille (1) destinée à faire passer de manière étanche un câble (8) à travers une paroi (7), comprenant
un élément de logement (2) doté d'un orifice de logement (6) substantiellement cylindrique, pour le logement du câble (8),
un élément à bride (3) destiné à l'application axiale de la douille (1) sur la paroi (7),
une bague d'étanchéité (4) périphérique,
sur des interfaces (9₂, 9₃, 9₄, 9₅) des éléments (2, 3, 4) respectifs, la douille (1) étant coupée en direction radiale et ainsi susceptible d'être placée sur le câble (8) en direction radiale,
pour la liaison de la douille (1) avec la paroi (7), la douille (1) étant contrainte par des moyens de fixation (23) en direction axiale contre la paroi (7),
l'élément à bride (3) comportant une bague d'appui (5) périphérique qui lorsqu'elle est montée, recouvre la bague d'étanchéité (4) en direction radiale et du fait de la contrainte, soumet la bague d'étanchéité (5) aux moyens de fixation dans la direction de la paroi (7),
**caractérisée en**
**ce que** pour une insertion assurant l'étanchéité, la bague d'étanchéité (4) se situe en direction axiale entre l'élément à bride (3) et la paroi (7) et considérée dans la direction périphérique (U), l'interface (9₅) de la bague d'appui (5) est placée avec un déport par rapport à l'interface (9₄) de la bague d'étanchéité (4).

2. Douille selon la revendication précédente, **caractérisée en ce que** considérée dans la direction périphérique (U), l'interface (9₅) de la bague d'appui (5) est placée au moins dans la région du point de contact entre la bague d'appui (5) et la bague d'étanchéité avec un déport par rapport à l'interface (9₄) de la bague d'étanchéité (4).

3. Douille selon l'une quelconque des revendications précédentes,
**caractérisée en ce qu'**une partie partielle (20) non coupée de la bague d'appui (5) chevauche l'interface (9₄) de la bague d'étanchéité (4) dans la direction périphérique (U), de sorte que la partie partielle (20) non coupée vienne s'appuyer sur deux segments (24', 24") de la bague d'étanchéité (4), qui considérés dans la direction périphérique (U), sont adjacents par deux côtés opposés à l'interface (9₄) de la bague d'étanchéité (4).

4. Douille selon l'une quelconque des revendications précédentes,
**caractérisée en ce que** l'élément à bride (3) comporte une première et une deuxième partie de bride (13', 13") séparée de celle-ci et **en ce que** l'élément de logement (2) comprend une première et une deuxième unité de logement (12', 12") séparée de celle-ci, notamment la première partie de bride (13') étant conçue en monobloc avec la première unité de logement (12') et la deuxième partie de bride (13") étant conçue en monobloc avec la deuxième unité de logement (12")

5. Douille selon l'une quelconque des revendications précédentes,
**caractérisée en ce que** la bague d'étanchéité (4) comprend une première partie de bague d'étanchéité (14') et une deuxième partie de bague d'étanchéité (14") séparée de celle-ci, notamment la première partie de bague d'étanchéité (14') étant assemblée de manière inamovible avec la première partie de bride (13') et la deuxième partie de bague d'étanchéité (14") étant reliée de manière inamovible avec la deuxième partie de bride (13").

6. Douille selon la revendication 4 et 5, **caractérisée en ce que**, considérées dans la direction périphérique, les interfaces (9₃, 9₅) de la bague d'étanchéité et de la bague d'appui (5) sont placées en déport mutuel de telle sorte qu'au moins dans la région de l'interface (9₅) de la bague d'étanchéité (4), la première partie de la bague d'appui (15') appartenant à la première partie de bride (13') soumette en direction axiale aussi bien la première que la deuxième partie de la bague d'étanchéité (13', 13").

7. Douille selon l'une quelconque des revendications précédentes,
**caractérisée en ce que** la bague d'appui (5) forme une première surface d'application (21) sur laquelle la bague d'étanchéité (4) est appliquée de manière à assurer l'étanchéité, dans la région de la première surface d'application (21), la bague d'appui (5) étant orientée de manière angulaire, avec un angle (α) de plus de 30° par rapport à un plan d'étanchéité (E).

8. Douille selon l'une quelconque des revendications précédentes,
**caractérisée en ce que** la bague d'appui (5) forme une première surface d'application (21) sur laquelle la bague d'étanchéité (4) est appliquée de manière à assurer l'étanchéité, la première surface d'application (21) étant conçue sous forme conique ou sphérique et s'ouvrant vers l'intérieur en direction radiale.

9. Douille selon l'une quelconque des revendications précédentes,
**caractérisée en ce que** l'interface (9₄) de la bague d'étanchéité (4) s'écoule de manière rectiligne et considérée en vue latérale, est orientée à la parallèle d'une direction de contrainte (L).

10. Douille selon l'une quelconque des revendications 1 à 8, **caractérisée en ce que** l'interface (9₄) de la bague d'étanchéité (4) s'écoule de manière rectiligne et considérée en vue latérale, est orientée notamment sous un angle de plus de 30° par rapport à une direction de contrainte (L).

11. Douille selon l'une quelconque des revendications 1 à 8, **caractérisée en ce que** considérée en vue latérale, l'interface (9₄) de la bague d'étanchéité (4) s'écoule en courbe croissante, notamment croissante à partir de la première surface d'application (21) de la bague d'appui (5) sur la bague d'étanchéité (4).

12. Douille selon l'une quelconque des revendications 1 à 8, **caractérisée en ce que**, considérée en vue latérale, l'interface (9₄) de la bague d'étanchéité (4) présente une forme dentelée.

13. Douille selon l'une quelconque des revendications précédentes,
**caractérisée en ce que** la partie de bague d'étanchéité (14) est un composant d'une pièce d'étanchéité (16) en monobloc, laquelle comporte par ailleurs au moins une pièce d'étanchéité radiale (17), notamment deux pièces d'étanchéité radiales (17) pour assurer l'étanchéité de l'interface (93) de l'élément à bride (3), ainsi qu'une pièce d'étanchéité périphérique (18) pour assurer l'étanchéité au moins partielle du câble (8) à l'intérieur de l'élément de logement (2), l'au moins une pièce d'étanchéité radiale (1) reliant la pièce d'étanchéité périphérique (18) avec la partie de bague d'étanchéité (14).

14. Douille selon la revendication précédente, **caractérisée en ce que** la pièce d'étanchéité (16) comprend par ailleurs au moins un support axial (25) qui assure l'étanchéité d'au moins une partie de l'interface (9₂) de l'élément de logement (2) et qui porte plusieurs lèvres d'étanchéité (19) de la pièce d'étanchéité périphérique (18).
